(19) Europäisches Patentamt / European Patent Office / Office européen des brevets

(11) **EP 4 575 406 B1**

(12) **EUROPEAN PATENT SPECIFICATION**

(45) Date of publication and mention
of the grant of the patent:
**05.08.2026 Bulletin 2026/32**

(21) Application number: **23218658.5**

(22) Date of filing: **20.12.2023**

(51) International Patent Classification (IPC):
*G01C 21/34* *(2006.01)*     *G01C 21/00* *(2006.01)*

(52) Cooperative Patent Classification (CPC):
**G01C 21/3889; G01C 21/3446; G01C 21/3896**

(54) **A MAP CLIENT FOR A VEHICLE**

KARTENCLIENT FÜR EIN FAHRZEUG

CLIENT DE CARTE POUR VÉHICULE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**25.06.2025 Bulletin 2025/26**

(73) Proprietor: **VOLVO TRUCK CORPORATION**
**405 08 Göteborg (SE)**

(72) Inventors:
• **HAGBERG, Joseph**
  **426 56 GÖTEBORG (SE)**
• **ISAKSSON, Patrik**
  **431 63 MÖLNDAL (SE)**
• **LARSSON, Marcus**
  **417 68 GÖTEBORG (SE)**
• **BROMANDER, Linda**
  **417 21 GÖTEBORG (SE)**
• **RÅKEBERG, Gustav**
  **447 32 VÅRGÅRDA (SE)**

(74) Representative: **Kransell & Wennborg KB**
**P.O. Box 2096**
**403 12 Göteborg (SE)**

(56) References cited:
**US-A1- 2006 025 923     US-A1- 2006 155 462
US-A1- 2008 021 642     US-A1- 2009 182 500
US-A1- 2020 393 261**

Description

## TECHNICAL FIELD

The present disclosure relates to the field of driver information systems in vehicles. In particular aspects, the disclosure relates to a map client supported by a remote map-data server, as well as a method of operating such a map client. The teachings to be disclosed herein can be applied to heavy-duty vehicles, such as trucks, buses, and construction equipment, among other vehicle types. Although the description may refer to a particular vehicle or vehicle type, the applicability of this disclosure is not so restricted.

## BACKGROUND

Within the broader category of driver information systems (DISs) or driver assistance systems, map clients are devices for displaying or otherwise conveying map information to the driver of an operating vehicle. A map client may optionally include navigation functionalities, which take over at least part of the decision-making related to navigation, such as the choice of a suitable path between a current position and a desired destination. In the case of an autonomous vehicle, the map client may be at the service of an automated driving system (ADS).

The map client is assisted by a server, which due to the moving nature of the vehicle, communicates with the map client over a link that has at least one wireless segment. Although the map client may be entitled to use a considerable amount of map data (essentially with global coverage), it is only a minor portion of this map data that resides in the map client's local memory at a given point in time. A number of factors in the past decades have spurred this development, including the advent of very fine-grained map information, the increasing rate at which the drivable environment is being extended and renewed, and the availability of very affordable wireless (cellular) data communications. However, the quantity of data to be exchanged between the map client and server is still not a negligible cost driver, and relying too heavily on this modality may bring reliability problems as cellular networks may suffer from temporary congestion. Last but not least, the wireless communications may contribute relatively significantly to the map client's total energy consumption, which could appreciably reduce the running range of small battery-powered vehicles designed for urban use.

US20130345977A1 discloses a map updating system including a map server and a vehicle-mounted navigation apparatus which have been conceived with a view to limiting the volume of data that needs to be downloaded to the vehicle during operation. This aim is achieved with the assistance of a driving history database storage, which stores driving history data representing a driving history of the vehicle. The map updating system determines, based on the driving history data, a location visited a predetermined number of times or more as a first destination; determines, based on the driving history data, a route which was used a predetermined number of times or more among routes used to visit the first destination as a first route; determines a second route that is to be used to visit the first destination when a part of the first route is unusable; and updates map data in the navigation apparatus in order of (i) data on the first route and second route and (ii) other data.

US2006155462A1 discloses a distribution map data generating method for generating distribution map data used to distribute a map through communication. The distribution map data generating method comprises:

- extracting road data and name data over a plurality of map area blocks to indicate a route passing through the plurality of map area blocks, wherein the road data and name data are extracted from road map data that includes

  ◦ road data set in correspondence to each of specific map area blocks to provide position information indicating positions of roads in the map area block, and

  ◦ name data set in correspondence to each of the map area blocks to provide name information indicating names of the roads in the map area block;

- generating integrated name data by integrating name information in the extracted name data, which is set in correspondence to a plurality of map area blocks to indicate a single road, so as to provide common name information for indicating name of a road in common with the plurality of map area blocks; and

- generating the distribution map data by using the extracted road data and the integrated name data.

US2006025923A1 discloses a method for displaying a map on a mobile client device. The method comprises:

- storing map data on a server, the map data comprising road data with respect to roads of multiple different road types;

- determining a route from a starting point to a destination within an area covered by the map data, the route comprising one or more route segments;

- defining a corridor map on the server, the corridor map comprising the route segments and the roads of the different road types that are within different, respective distances, determined by the road types, of the route segments;

- downloading the road data with respect to the route segments and the roads of the different road types comprised in the corridor map from the server to the client device; and

- rendering on the client device, using the downloaded road data, one or more images, each image comprising at least a respective portion of the corridor map.

US2020393261A1 discloses a computer-implemented method comprising:

- receiving sensor data from a sensor of an autonomous vehicle;

- determining a presence of a lane closure object located on a lane element;

- determining a change of the lane closure object, selected from the presence of the lane closure object or absence of the lane closure object on the lane element;

- generating a change candidate based on the change in the lane closure object;

- obtaining a plurality of the change candidates during a time period or the autonomous vehicle being on a preceding lane element on the route;

- analyzing the plurality of change candidates for the change being the presence of the lane closure object or the absence of the lane closure object on the lane element;

- generating a final change candidate based on the change; and

- providing the final change candidate for updating a high definition map of the route having the lane element.

## SUMMARY

In the context of a vehicle-carried map client which obtains its map data from a remote server, it is an objective of the present disclosure to optimize the transfer of map data. On the one hand, the driver expects a dependable map client, which is responsive and has a very high reliability. On the other hand, the transfer of map data from the server to the client should be managed with control over the total data volume, not to incur unnecessary external cost (e.g., fees to cellular operator) and/or unnecessary energy consumption. A particular objective is to manage the map data transfer with foresight, to avoid urgent requests for map data which might not be possible to fulfil at times of high network load.
In a first aspect of the present disclosure, there is provided a map client for a vehicle. The map client may take the form of a computer system with the relevant configuration. The map client comprises: a geo-positioning module configured to estimate a current position; a wireless interface configured to request and receive map data from a server over a wireless link, wherein the map data is divided into a basic layer and a refinement layer of a navigation map, wherein the basic layer includes road segments of major roads and the refinement layer but not the basic layer includes road segments of minor roads; a map-data memory configured to store basic-layer map data semi-persistently and to store any refinement-layer map data temporarily; a path-planning module configured to generate paths according to a planning query using the map data stored in the map-data memory, the generated paths including a main path and one or more alternative paths; and a path-execution module configured to provide driving instructions for following the main path from the estimated current position, while assessing whether one of the alternative paths is more suitable for driving from the current position than the main path. According to said first aspect, the wireless interface is configured to request refinement-layer map data from the server corresponding to a neighborhood of the main path, and the neighborhood of the main path has a size that is inversely related to a local road density of the navigation map.
In a second aspect, there is provided a method of operating a map client in wireless communication with a server. The method comprises: repeatedly estimating a current position using a geo-positioning technique; receiving map data from the server over a wireless link, wherein the map data is to be stored semi-persistently in a map-data memory of the map client, wherein the received map data belongs to a basic layer of a navigation map and the basic layer includes road segments of major roads; generating a plurality of paths according to a planning query using the map data stored in the map-data memory, the generated paths including a main path and one or more alternative paths; requesting map data from the server to be stored temporarily in the map-data memory, wherein the requested map data pertains to a neighborhood of the main path and belongs to a refinement layer of the navigation map, wherein the refinement layer but not the basic layer includes road segments of minor roads; and providing driving instructions for following the main path from the estimated current position, while assessing whether one of the alternative paths is more suitable for driving from the current position than the main path. The neighborhood of the main path has a size that is inversely related to a local road density of the navigation map.

In further aspects of the present disclosure, there is provided a computer program containing instructions for causing a computer system to carry out the method of the second aspect. The computer program may be stored or distributed on a data carrier. As used herein, a "data carrier" may be a transitory data carrier, such as modulated electromagnetic or optical waves, or a non-transitory data carrier. Non-transitory data carriers include volatile and non-volatile memories, such as permanent and non-permanent storage media of magnetic, optical or solid-state type. Still within the scope of "data carrier", such memories may be fixedly mounted or portable.

In other words, the above-stated problem is addressed by the combination of, on the one hand, generating paths using the map data stored in the map-data memory and, on the other hand, requesting refinement-layer map data from the server for a neighborhood of a currently followed main path.

Optionally in some examples, including in at least one preferred example, the path-planning module is configured to generate, during execution of the main path, one or more additional alternative paths according to the planning query from the estimated current position using the map data stored in the map-data memory. This may allow dynamic rerouting of the vehicle.

Optionally in some examples, including in at least one preferred example, the wireless interface is configured to request refinement-layer map data from the server corresponding to a neighborhood of the one or more alternative paths. This may allow efficient navigation along the alternative path, and also rerouting off the alternative path if needed.

The neighborhood of each path (for which refinement-layer map data is requested from the server) has a size $d$ that is inversely related to a local road density of the navigation map. The inventors have discovered that this criterion for defining the environment - which is also a way of controlling the quantity of map data to be requested from the server - favors an advantageous behavior of the map client in most representative or normal operating conditions. The inventors hypothesize that the criterion is well tailored to how much map data is typically needed to perform efficient rerouting of the vehicle, e.g., when the main route becomes congested at short notice. In an area with a relatively sparser road network, the map client may need to look relatively further away from the main path to find a useful alternative path.

It is understood that the size $d$ is *inversely related* to a local road density $\rho$ if $d$ is non-increasing with respect to $\rho$. Function of $\rho$ which satisfy this condition are, for example $d(\rho) = K_1/\rho$; $d(\rho) = K_2/\rho^2$; $d(\rho) = K_3/\rho^a$, where the exponent $a$ is a positive real constant; $d(\rho) = K_4 - K_5\rho$; $d(\rho) = K_6 - \log \rho$, where $K_1, K_2, ..., K_6$ are positive real constants. In the examples, furthermore, the *size d* may be a width of a tube-shaped environment centered on a main or alternative path. Alternatively, the size $d$ may be a diameter of a circle centered on the current position, a generalized diameter (i.e., largest width) of a rectangle centered on the current position, or a generalized diameter of a predefined geometric shape which moves with the current position. In the examples, furthermore, the *local road density* is a local characteristic of the navigation map, i.e., the local road density varies between different points or regions of the navigation map. It may be quantified as a total length of the road segments per unit area of the navigation map. Alternatively, the local road density may be quantified as a vertex connectivity of an imaginary graph whose edges are the road segments of the navigation map. A graph-theoretical definition of vertex connectivity may be the size of a minimal vertex cut. Alternatively, the local road density may be quantified as a data volume (map data volume) required to represent a unit area of the navigation map.

Optionally in some examples, including in at least one preferred example, the path-execution module is configured such that, if one of the alternative paths is more suitable than the main path, it shall adopt this alternative path as new main path. This will cause the path-execution module to provide driving instructions for following the new main path from the estimated current position. As an optional addition, the wireless interface may be configured to update the neighborhood in accordance with the current position and to request, if necessary, additional refinement-layer map data from the server corresponding to the updated neighborhood. This may allow dynamic rerouting of the vehicle, particularly rerouting away from the new main path.

In the terminology of the present disclosure, a *planning query* is to be understood broadly. It may be a command to the path-planning module to present all drivable paths away from the current position which satisfy some explicit or implicit criterion. For example, the planning query may request paths with at least a minimum probability of being used by the vehicle. In another example, the planning query may stipulate that only such paths should be presented which use roads with at least a minimum carrying capacity and/or with a minimum expected average speed and/or which allow a special vehicle type to pass (e.g., trailer, crane, excess height, excess weight). In another example, the planning query requests paths which are at most a specified distance (say, 20 km) from a charging station or refueling station. In another example, the planning query requests paths which generally travel into a specified direction (say, north). In another example, the planning query requests paths leading from a starting position (say, the current position) to a specified destination. It is emphasized that the planning query does not necessarily include a request for routing between a starting position and a destination.

In the present disclosure, *driving instructions* may refer to visual data (e.g., a relevant map view, a symbol showing a next turn or another upcoming maneuver), audible data (e.g., recorded or synthesized spoken instructions), haptic instructions (e.g., a vibratory alert to the driver that a turn or another maneuver is imminent and will be displayed) and the like. The driving instructions may be directed to a human driver, or otherwise to a component of the vehicle or an executing software program, such as an ADS.

In the present disclosure, a path may be considered *suitable* (or less suitable) based on various factors. For one thing, the main path may have become less suitable if the vehicle is no longer positioned on the main path as a result of missing a turn or another unintentional maneuver; if the vehicle is now traveling on an alternative path as a result of the unintentional maneuver and it would cause nonnegligible delay to go back to the main path, the alternative path may be considered more suitable. The main path might also become less suitable if the driver subjectively prefers an alternative path and chooses to drive on the alternative path; the path-planning module normally does not know the driver's intention but has to make an informed guess. Further, the suitability of a path may depend on the degree of congestion of the road segments making up the path, which can be measured in terms of the actual mean speed of vehicles traveling on the path. The degree of congestion may alternatively be expressed as a percentage representing the actual mean speed as a fraction of the mean speed in normal driving conditions or the mean speed when the road is substantially empty. Another measure of the suitability may be the road surface conditions, e.g., presence of frost, snow, rain, pollution, atmospheric pollution. If the special case where the path leads to a specified destination, the suitability of the path may correspond to the estimated total driving time to said destination.

In the present disclosure, there are several feasible ways of defining the distinction between *major and minor roads,* and none of these definitions is an essential feature of the invention. In broad terms, the major roads shall be such that basic path planning is possible, whereas the minor roads may be such as to support more optimized path planning and/or more efficient rerouting. With this said, the major roads should not represent more than a manageable data volume, such that it is possible to store the basic-layer map data semi-persistently in the map-data memory of a map client which runs on conventional or typical hardware. In particular, the minor roads may be characterized by at least one of: having a relatively lower traffic throughput capacity, having a relatively lower historic usage, being administered by a lower-ranking road authority. For example a national road authority may be responsible for building and maintain roads suitable for long-distance travel, whereas local, rural or low-grade roads are entrusted to a municipal/regional road authority. Also proprietary definitions may be used.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

## BRIEF DESCRIPTION OF THE DRAWINGS

Aspects and embodiments are now described, by way of example, with reference to the accompanying drawings, on which:

figure 1 shows a vehicle-mounted map client in wireless communication with a server storing map data;

figure 2 shows a layered representation of a navigation map;

figure 3 is a flowchart of a method of operating a map client, according to embodiments herein;

figure 4 shows a main path and several alternative paths, wherein a first portion of the main path has been provided with a tube-shaped environment of a first size and a second portion of the main path has been provided with an environment of a second size, different from the first size; and

figure 5 shows a main path and several alternative paths, wherein a point on the main path has been provided with circle-shaped environments with two alternative sizes.

**DETAILED DESCRIPTION**

The detailed description set forth below provides information and examples of the disclosed technology with sufficient detail to enable those skilled in the art to practice the disclosure.

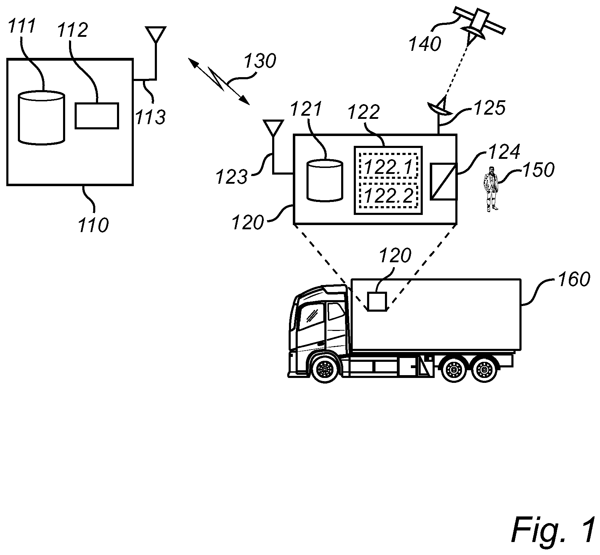

Figure 1 is a generalized block diagram showing main components of a map client 120 in communication with a server 110 storing map data. The map client 120 is visible, on the one hand, as a component carried in or installed in a vehicle 160 and, on the other hand, in an enlarged view showing its inner workings to be described next. It is noted that the vehicle 160 may be a heavy commercial vehicle, such as a truck, a bus or a construction equipment vehicle.

The map client 120 comprises processing circuitry 122 which implements at least a path-planning module 122.1 and a path-execution module 122.2. The path-planning module 122.1 and the path-execution module 122.2 may correspond to different software programs that the processing circuitry 122 executes.

The map client 120 further comprises a memory 121 acting, at least in part, as a map-data memory configured to store basic-layer map data semi-persistently and to store any refinement-layer map data temporarily. The basic-layer map data may correspond to a preloaded map. The memory 121 includes at least a portion acting as a runtime memory (e.g., with relatively fast access, oftentimes volatile), but it may optionally include a non-volatile portion as well.

The fact that the basic-layer map data is stored semi-persistently may signify that the map client 120 makes best efforts to always keep an up-to-date version of the basic-layer map data in the memory 121. For example, when the map client 120 is restarted or the memory 121 is erased for other reasons, the map client 120 attempts to download the basic-layer map data as soon as practicable (e.g., in view of available connectivity), and it attempts to obtain an update or incremental update of a portion of the basic-layer map data once notified that the update has been released. Alternatively, the server 110 pushes the relevant map data to the map client 120. This could include pushing the basic-layer map data to the map client 120 after a restart and/or pushing updated map data (e.g., an updated portion of the basic-layer map data) to the map client 120.

The map client 120 further comprises a wireless interface 123 adapted for cellular (e.g., 3GPP LTE or 3GPP NR) or non-cellular (e.g., IEEE 802.11, C-V2X) communication, including data communication. The embodiment illustrated in figure 1 is further provided with a user interface 124 for displaying information to a user 150 of the map client 120 (e.g., a driver of the vehicle 160) and/or for receiving instructions and other inputs from the user 150. In particular, the user interface 124 may be configured for outputting visual data, audible data and haptic instructions. As already explained, a "driver" may be a human or an ADS; in the latter case, the user interface 124 is adapted for machine-to-machine communication. A still further component of the map client 120 which is of relevance for the teachings herein is a geo-positioning module 125 configured to estimate a current position of the map client. For example, the geo-positioning module 125 may include a global navigation satellite system (GNSS) receiver. In embodiments here the map client 120 is carried in a vehicle 160, the geo-positioning module 125 may be a vehicle-installed component which is made available to the map client 120, e.g., through an application interface. The map client 120 may be powered by an internal battery. In embodiments where the map client 120 is installed in a vehicle 160, it may instead take its power from an internal power grid of the vehicle.

A server (or host computer, or map-data repository) 110 is shown in the upper left half of figure 1. The server 110 is assumed to include a non-volatile memory 111, processing circuitry 112 and a wireless interface 113 compatible with the wireless interface 123 of the map client 120. While the server 110 is in operation, the memory 111 stores map data and makes this available to the map client 120 shown in figure 1 and to any further map clients (not shown) which are supported by the server. map client 120 and further map clients may be entitled to request a download of map data or retrieve it independently by accessing the memory 111. The server 110 may be implemented as a localized server or, in a distributed implementation, as a network of multiple connected servers.

The map data in the memory 111 includes at least a current version of a basic layer and of a refinement layer of a navigation map. The map data may optionally include historic versions. For purposes of the operation of the map client 120, the road segments in the navigation map are classified as either major roads or minor roads. The basic layer includes road segments of the major roads but normally lacks road segments of the minor roads. The refinement layer includes road segments of the minor roads. Whether or not the refinement layer shall include the road segments of the major roads depends on how the map data is to be used in the map client 120: if the refinement-layer map data is intended to *replace* the basic-layer map data in the areas where it is available, then the refinement-layer map data includes the road segments of the major roads; but if the refinement-layer map data is intended to *augment* the basic-layer map data (i.e., it is to be merged with the basic-layer map data or used in combination therewith) in the areas where it is available, then the refinement-layer map data does not need to include the road segments of the major roads.

As explained above, there exist a number of ways of defining the distinction between *major and minor roads,* and none of these definitions is an essential feature of the invention. A definition of major/minor roads may be considered suitable if the major roads shall be such that the basic-layer map data supports basic path-planning functionality, whereas the minor roads may be such as to support more optimized path planning and/or more efficient rerouting. The major roads should not be too liberally defined, to the point where it occupies a data volume that cannot be conveniently stored semi-persistently in the map-data memory of a map client implemented with conventional or typical hardware.

For example, the minor roads may be characterized by one of the following properties or a combination thereof:

- The minor roads have a relatively lower traffic throughput capacity.

- The minor roads have a relatively lower historic usage.

- The minor roads are administered by a lower-ranking road authority. For example a national road authority may be responsible for building and maintain roads suitable for long-distance travel, whereas local, rural or low-grade roads are entrusted to a municipal/regional road authority.

- The minor roads belong to a minor category in accordance with a proprietary definition, such as the parameter *RouteType* in the software HERE SDK™ marketed by HERE Global B.V., Eindhoven, Netherlands, such that for example the values LEVEL_1_ROAD (international road) and LEVEL_2_ROAD (national road) may be identified as major roads, whereas the values LEVEL_3_ROAD (primary road), LEVEL_4_ROAD (secondary road), LEVEL_5_ROAD (minor road) and LEVEL_6_ROAD (avenue) are referred to the category of minor roads.

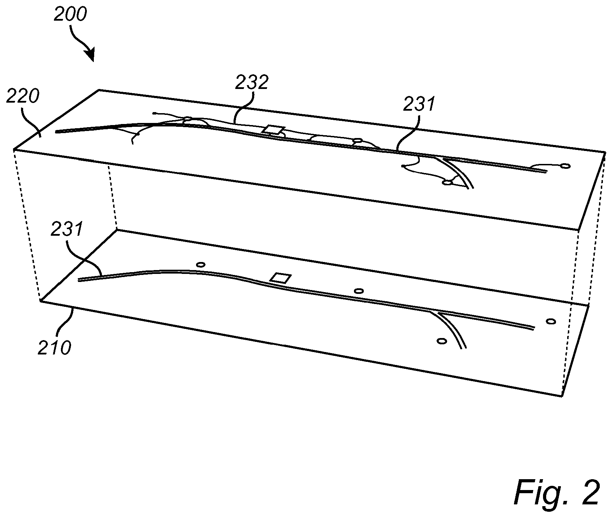

To illustrate this concept of map layers, figure 2 shows a navigation map 200 which includes a basic layer 210 containing only major roads 231. The circles and squares represent towns, villages or other geographic features. The navigation map 200 further includes a refinement layer 220 which contains minor roads 232 in addition to the major roads 231. In this example, the refinement-layer map data is suitable for replacing the basic-layer map data in the areas where it is available.

The navigation map may have further features that are not visible in figure 2. For example it may be divided into tiles, such as surface-covering rectangular tiles of a predefined size. Each tile may be associated with a pre-agreed index allowing it to be conveniently referenced by the map client 120 when the map client 120 needs to request additional map data or updated map data from the server 110. For example, the index may be equal to (rounded) geocoordinates of a northwest corner of the tile.

Returning to figure 1 and the description of the map client 120, the wireless interface 123 is configured to be used for receiving map data from the server 110. The received map data may be stored in the memory 121 in such manner that it is available for use by the processing circuitry 122. The received map data may occupy unused memory space in the memory 121. Alternatively, in some instances, the received data may replace expired data (overwriting) or replace excess data which would exceed a data volume limit if retained in the memory 121. The map client 120 may as well be configured to purge expired data from the map-data memory 121 on a periodic or event-triggered basis.

The path-planning module 122.1 in the map client 120 is configured to generate paths according to a planning query using the map data stored in the map-data memory 121. It is noted that the stored map data may include basic-layer map data and refinement-layer map data. Each of these layers may exist in different versions; newly released versions (updates, incremental updates) cannot always be distributed instantly to the map clients 120, notably due to connectivity limitations, or because the map clients 120 are under heavy load by other tasks and need to de-prioritize update requests. As a result, the map-data memory 121 may hold an older version of the map data than the server 110, such that the path-planning module 122.1 may have to generate paths based on said older version. In some embodiments, the path-planning module 122.1 uses only the map data in the map-data memory 121.

The generated paths include at least a main path and possibly - depending on geographic conditions, driving conditions and the broadness of the planning query - also one or more alternative paths. The path planning may be performed using any suitable path-planning (or motion-planning) algorithm, including potential-field based algorithms, sampling-based algorithms, grid-based searches, interval-based searches, geometric algorithms, with A* and rapidly exploring random tree (RRT) as to notable examples. In some embodiments, the path-planning module 122.1 is further configured to generate, during execution of a path, one or more additional alternative paths according to the planning query from the estimated current position using the map data stored in the map-data memory.

A planning query in the sense of the present disclosure may be a command to the path-planning module to present all drivable paths away from the current position which satisfy some explicit or implicit criterion. For example, the planning query may request paths with at least a minimum probability of being used by the vehicle. The probability may be based on a historic driving pattern of the vehicle, or of a similar vehicle or of a fleet of vehicles to which the vehicle belongs. The probability may alternatively be estimated by a machine-learning model which takes as input such map data that describes the road segments which make up the path (e.g., geometry, geography, topography, road type) and which has been trained on historic driving patterns. In another example, the planning query may stipulate that only such paths should be presented which use roads with at least a minimum carrying capacity and/or with at least a minimum expected average speed and/or which allow a special vehicle type to pass (e.g., trailer, crane, excess height, excess weight). In another example, the planning query requests paths which are at most a specified distance (say, 20 km) from a charging station or refueling station. In another example, the planning query requests paths which generally travel into a specified direction (say, north). In another example, the planning query requests paths leading from a starting position (say, the current position) to a specified destination. The planning query may include a termination criterion, e.g., the generated path shall end a specified distance from a starting position or from a current position. For the purposes of the present disclosure, the planning query need not be destination-based, i.e., it need not be a request for routing between a starting position and a destination.

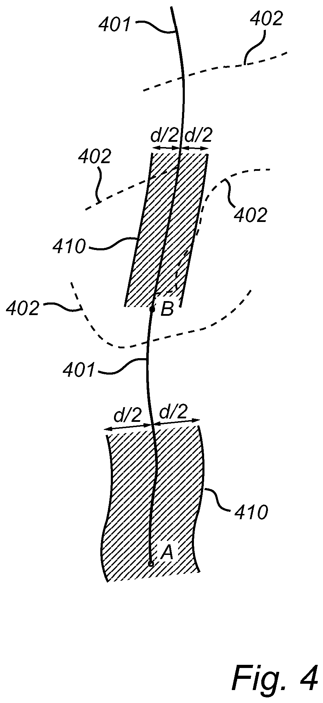

Figure 4 illustrates example outputs of a planning query including a main path 401 (solid line) and a number of alternative paths 402 (dashed line). Each of the paths may continue beyond the drawn portion. The paths are composed of road segments. The planning query in this example may or may not be destination-based, in the sense that the paths lead to a specified destination. A planning query which is not destination-based may instead specify, for instance, that the paths 401, 402 shall only be composed of road segments suitable for a heavy vehicle (e.g., a vehicle which is allowed to exceed a regulatory weight limit, such as 3,500 kg, 7,500 kg or 12,000 kg). It is assumed that the vehicle carrying the map client 120 is located initially at a starting position A and then moves upward to a position B. Not all of the alternative paths 402 may have been generated initially; in embodiments where the path-planning module 122.1 is configured to generate additional alternative paths according to the planning query while one path is being executed, the alternative paths 402 located in the upper portion of figure 4 may have been generated by the path-planning module 122.1 only after the vehicle reached position B.

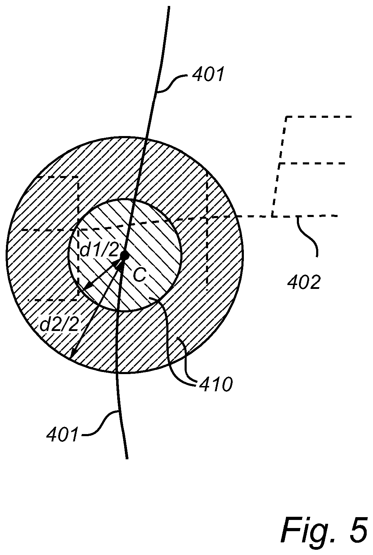

Figure 5 illustrates, similarly to figure 4, an example output of a different planning query, including a main path 401 and multiple alternative paths 402. It is noted that the alternative paths 402 are tree-like in the sense that they share a common portion in the vicinity of the current position C but bifurcate to an increasing extent further away from there.

The path-execution module 122.2 in the map client 120 is configured to provide driving instructions for following the main path from the estimated current position. Driving instructions may here refer to visual data (e.g., a relevant map view, a symbol showing a next turn or another upcoming maneuver), audible data (e.g., recorded or synthesized spoken instructions), haptic instructions (e.g., a vibratory alert to the driver that a turn or another maneuver is imminent and will be displayed) and the like. The driving instructions may be descriptive (e.g., displaying a relevant map view to support the driver's decision-making) or imperative (e.g., requesting the driver to make a specific maneuver) or a combination of these. As mentioned, a "driver" in this sense may be a human or an ADS.

The path-execution module 122.2 is configured to provide the driving instructions based on the map data currently stored in the map-data memory 121. For example, if refinement-layer map data have been downloaded to the memory 121 after the main path was generated, the path-execution module 122.2 includes this new data in the displayed map view. Further, if an updated version of the map data has been downloaded to the memory 121, the driving instructions are to be based on this updated version. To achieve this, in some embodiments, the path-execution module 122.2 is configured to generate the driving instructions shortly before they are to be presented to the driver; the option of generating the driving instructions as soon as the main and alternative paths have been generated by the path-planning module 122.1 is less favorable from this point of view, as newer map data for the same regions of the navigation map may be received in the meantime.

While the path-execution module 122.2 provides the driving instructions relating to the main path, it assesses whether one of the alternative paths is more suitable for driving from the current position than the main path. The suitability of a path may be based on the vehicle's position (on or away from the path), it may refer to a degree of loading or degree of congestion on the road segments making up the path, or it may refer to local meteorological conditions. In implementations, the expected traveling speed or the estimated time of arrival may be a useful proxy for each of these factors. In implementations where no proprietary speed and congestion data are available, such data can be retrieved from publicly available online live maps, such as via the *Roads API* available from Google Cloud within Google LLC, Mountain View, CA, United States. Further possible suppliers include HERE Destination Weather, Meteomatics AG, Open Weather Map, AccuWeather Inc., Klimator AB. If the path-execution module 122.2 determines that one of the alternative paths is more suitable for driving from the current position than the main path, it shall adopt it as new main path. Accordingly, the driving instructions will henceforth relate to the new main path.

To support the mentioned functionalities by the path-planning module 122.1 and the path-execution module 122.2, the wireless interface 123 is configured to request refinement-layer map data from the server corresponding to a neighborhood of the main path 401. The wireless interface 123 may optionally be configured to request refinement-layer map data from the server corresponding to neighborhoods of the alternative path or paths 402 as well. The request may be limited to the vicinity of the current position of the map client 120, i.e., the refinement-layer data is requested for an environment which is at the same time close to the path and close to the current position. The request may be renewed (re-submitted) when the current position has changed as a result of the vehicle's movement; this may be described such that the wireless interface 123 is configured to update the neighborhood in accordance with the current position and to request, if necessary, additional refinement-layer map data from the server 110 corresponding to the updated neighborhood.

To illustrate the concept of a neighborhood, figure 4 shows two hashed areas which are example appearances of a tube-shaped neighborhood of the main path 401. In analytic language, if the main path 401 is described as a curve

$P_{401} \subset \mathbb{R}^2$ , then the tube-shaped neighborhood 410 is the point set

$$P_{410}(d) = \left\{ x \in \mathbb{R}^2 : \text{dist}(x, P_{401}) \leq \frac{d}{2} \right\}, \tag{1}$$

where d denotes a size (width) of the neighborhood 410, and the distance function may be defined as

$$\text{dist}(x, P_{401}) = \min_{y \in P_{410}} \|x - y\|.$$

If $\|x - y\|$ is taken to be the Euclidean norm, the distance will be measured in a direction orthogonal to the curve. In figure 4, the neighborhood 410 illustrated at position A has a larger size (width) d than the neighborhood 410 illustrated at position B, which may have been caused by a local variation in the factors that determine the size.

It is furthermore seen in figure 4 that the extent of each neighborhood 410 is limited to the vicinity of each of the positions A and B. The neighborhood may then be defined as an intersection of two points sets. In the case of position A, this may amount to using, instead of equation (1), the following definition of the neighborhood 410:

$$P_{410}(d, \ell) = \left\{ x \in \mathbb{R}^2 : \text{dist}(x, P_{401}) \leq \frac{d}{2} \right\} \cap \{ x \in \mathbb{R}^2 : \text{dist}(x, A) \leq \ell \}, \tag{2}$$

where the vicinity has radius $\ell$. Additionally, and particularly in the case of paths generated by a destination-based planning query, the extent of the neighborhoods 410 can be limited to a forward direction of movement; the outcome may have the appearance shown in figure 4 at positions A and B.

Figure 5 illustrates two circle-shaped environments 410 of a point C on the main path 401 which respectively have the sizes (diameters) $d_1$ and $d_2$. It is noted that the larger environment, with size $d_2$, is a solid circle, not an annulus. The circle-shaped environments 410 may be centered on the current position of the map client 120 at the time their corresponding map data are requested from the server 110. In generalizations, the neighborhood may have any suitable geometric shape centered on a (current) position on the main path 401 or alternative path 402.

The wireless interface 123 is configured to request refinement-layer map data from the server 110 corresponding to a neighborhood 410 having a size that it inversely related to a local road density of the navigation map. A local road density in this sense is a local characteristic of the navigation map, i.e., the local road density varies between different points or regions of the navigation map. It may be quantified as a total length of the road segments per unit area of the navigation map. (In figure 4, the local road density defined in this way is visibly greater around the upper half of the main path 401. In figure 5, the local road density appears to be maximal in the vicinity of position C, but is markedly less in the upper and lower portions of the main path 401.) Alternatively, the local road density may be quantified as a vertex connectivity of an imaginary graph whose edges are the road segments of the navigation map. A graph-theoretical definition of vertex connectivity may be the size of a minimal vertex cut. Alternatively, the local road density may be quantified as a data volume (map data volume) required to represent a unit area of the navigation map. As explained above, the size $d$ of the neighborhood 410 is considered to be inversely related to the local road density $\rho$ if d is a non-increasing function with respect to $\rho$, that is, if $d'(\rho) \leq 0$ in the relevant range of local road density $\rho$.

In implementations where the navigation map is divided into tiles, the map client 120 may identify a number of candidate tiles around the main path 401 (and optionally around the alternative paths 402) and obtain the local road density for each. The local road density for each tile may for example be available on request from the server 110 (this request is much less demanding than downloading the full refinement-layer map data for the same tiles) or possibly, the map client 120 may pre-load a table of the local road density for each tile at initialization or periodically.

To determine which tiles among the candidate tiles are to be requested, the map client 120 may read the local road density $\rho(C)$ for a tile containing a position C on the path, evaluate the size $d(\rho(C))$ and select further candidate tiles accordingly. The local road density of the further candidate tiles may be disregarded. Alternatively, to achieve a similar purpose, the map client 120 may operate iteratively in the following way:

- The local road density is evaluated as $\rho_1$ for the tile containing a position C on the path, and a first value of the size is computed, $d(\rho_1)$

- Further tiles are selected (in accordance with a desired shape of the neighborhood, such as a tube shape) if the first value the size $d(\rho_1)$ has not been reached, the local road density is re-evaluated as $\rho_2$, and a second value of the size is computed, $d(\rho_2)$

- Further tiles are selected if the second value the size $d(\rho_2)$ has not been reached, the local road density is re-evaluated as $\rho_3$, and a third value of the size is computed, $d(\rho_3)$.

- Repeat the latest step similarly until the selected titles reach (or exceed) the latest value of the size.

The iterative steps may be repeated for further positions on the path, and the complete neighborhood of the path may be formed as the union of the selected tiles for all positions.

Specifically, if the local road density corresponds to a data volume per unit area of the navigation map and the size has an inverse quadratic dependence ($d(\rho) = K_2/\rho^2$), then the configured behavior of requesting refinement-layer map data for a neighborhood having this size effectively amounts to a condition of meeting a predefined data budget. In other words, the iterative procedure outlined just above amounts to selecting so many candidate tiles around the current position of the vehicle that the total volume of the data representing these tiles is equal to the data budget. For example, the map client 120 may consider a circle or rectangle centered on the current position, inside which the candidate tiles are to be included in the neighborhood, and gradually increase the size of this shape until the data budget has been reached.

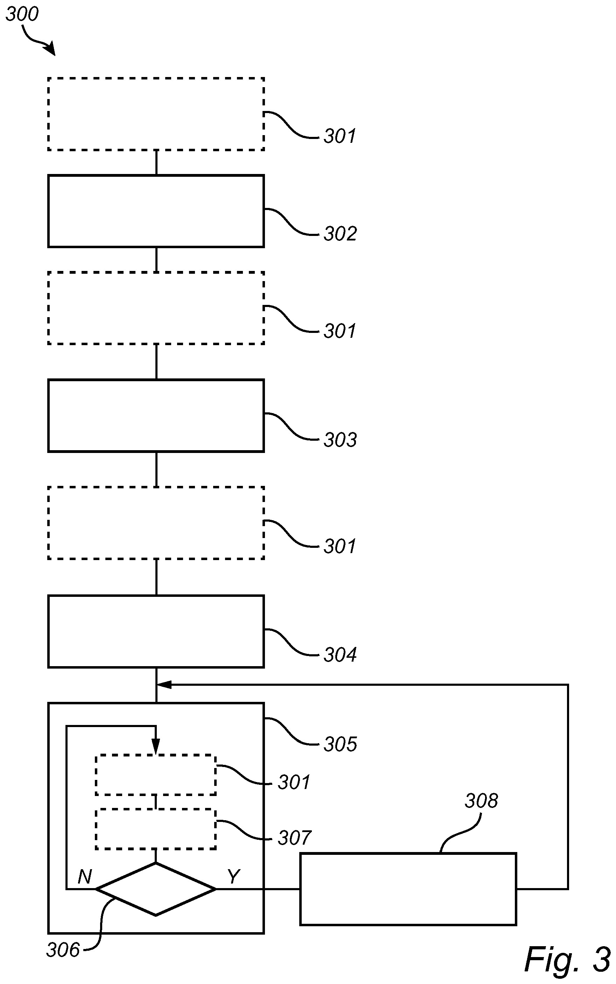

Turning to figure 3, the behavior of the map client 120 will now be described in terms of steps of a method 300. The method according to figure 3 can be implemented by any vehicle-carried, handheld or stationary computer system. The computer system may be communicatively connected to sensorics (e.g., GNSS receiver), a user interface and a wireless interface for communicating with a map-data server 110. For simplicity, the entity executing the method 300 will be referred to as a map client 120 in the following description.

Throughout the execution of the method 300, the current position is estimated using a geo-positioning technique, as may be implemented by a GNSS receiver. In the flowchart of figure 3, a number of example points in time at which the position estimation is performed have been illustrated as step 301. The execution of this step 301 may overlap in time with the execution of other method steps.

In a step 302, the map client 120 receives map data from the server 110 over a wireless link 130. The map data is to be stored semi-persistently in a map-data memory 121 of the map client 120, wherein the received map data belongs to a basic layer 210 of a navigation map 200 and the basic layer includes road segments of major roads 231 (see example in figure 2).

In a step 303, the map client 120 generates a plurality of paths according to a planning query and using (only) the map data stored in the map-data memory. The generated paths include a main path 401 and one or more alternative paths 402 (see examples in figures 4 and 5).

In a step 304, based on the output of step 303, the map client 120 requests map data from the server to be stored temporarily in the map-data memory. The requested map data pertains to a neighborhood 410 (see figures 4 and 5) of the main path 401 and belongs to the refinement layer 220 of the navigation map, wherein the refinement layer but not the basic layer includes road segments of minor roads 232. The neighborhood 410 has a size d that is inversely related to the local road density of the navigation map.

Further, in a step 305, the map client 120 provides - via a visual, aural or haptic user interface - driving instructions for following the main path from the estimated current position. In the meantime, in step 306, the map client 120 assesses whether one of the alternative paths is more suitable for driving from the current position than the main path. Further in the meantime while executing the main path by providing the driving instructions, in an optional step 307, the map client generates one or more additional alternative paths 402 from the estimated current position. To generate these additional alternative paths 402, the map client uses (only) the map data stored in the map-data memory 121, i.e., including the requested map data pertaining to the neighborhood 410 of the main path 401.

## Example

At initialization the map client 120 has a preloaded map consisting of road segments for selected major roads (basic layer). The server 110 all roads, including minor roads (refinement layer), and a new map version is released biweekly. All road segments have an individual version that can be updated between map versions.

When the map client 120 is initialized in a virgin state, it checks for the version of the navigation map in the server 110. If the preloaded map has the same version as the server's navigation map, the map client 120 uses the preloaded map as is. The map client 120 builds a tree of possible paths. Most probably, since only segments of major roads are available in the preloaded map, the length or the probability of some possible paths does not reach the thresholds. A map data request will therefore be sent to the server 110, wherein a tree of possible paths is calculated, including main and alternative paths. The map client 120 is updated with the road segments missing. The amount of data is limited based on a minimum length and a minimum probability to reach a certain road segment. The map client 120 continues to build and monitor the tree of possible paths. When the length or the probability again falls below the threshold, the wireless interface 123 sends a renewed map data request to the sever 110. Based on the current position of the vehicle - and hence of the map client 120 - an updated tree of possible paths is calculated, and the map client 120 is again updated with the map data misses. The amount of data is limited based on a minimum length and a minimum probability to reach a certain road segment. Parallel to the preloaded map (base layer), the map client 120 stores the downloaded road segments (refinement layer) in the map-data memory 121 for reuse next time the same paths are driven.

When a new map version becomes available in the server 110, the map client 120 gets notified (update alert). Since the memory 121 and the preloaded map has an older version, the map client 120 determines that the update is necessary. The map client 120 builds a tree of possible paths using map segments from the old map version. The road segments from the old map version may be verified by sending a map verification request to the server 110, including road segment identifiers and version numbers. The server 110 verifies the segments against the new map version, and sends the map client 120 an update message with changed road segments and removed road segments. The map client 120 then starts to build the new map version using old unchanged and new updated road segments.

Later, when the length or the probability of possible paths in the tree drops below the threshold, a map data request is sent to the server 110. Based on the vehicle's (the map client's 120) new position and what data is available, an updated tree of possible paths is calculated, and the map client 120 is updated with the map data it misses. The map client 120 stores the new and updated road segments are stored in the map-data memory 121. In parallel, it also stores information about what road segment versions that are valid for the new map version, for reuse next time the same paths are driven.

At such times when the map client 120 has to operate without a functioning connection to the server 110, no verification requests can be sent to the server 110 but the vehicle still has all preloaded segments and all cached segments available in the memory 121. The map client 120 builds and monitors the tree of possible paths based on the current content of the memory 121, e.g., the latest version of all preloaded road segments and all road segments. By using the available version of the road segments stored in memory 121 while the server 110 is unavailable, the map client 120 is able to operate without access to the latest map version, which favors reliability and robustness.

## Example computer implementations

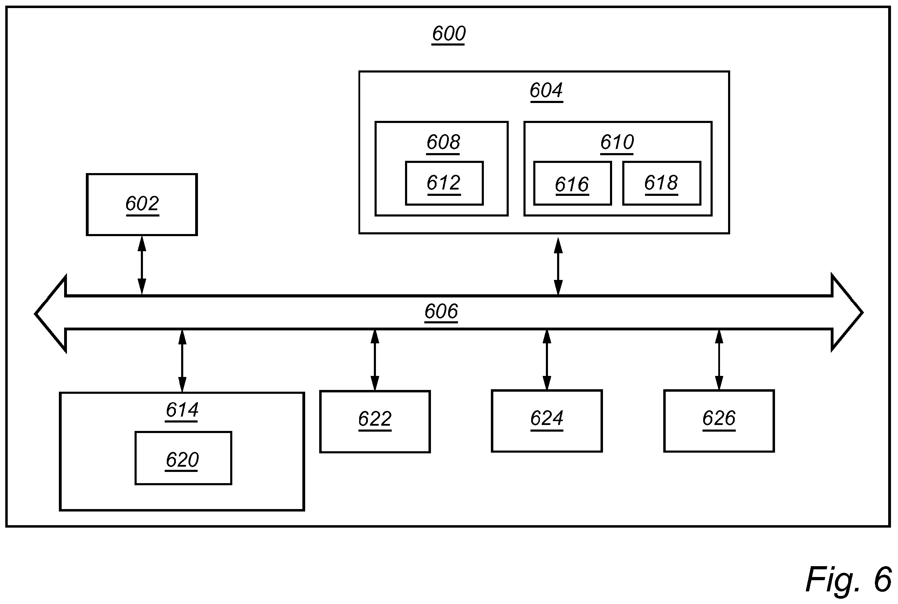

By way of example, figure 6 is a schematic diagram of a computer system 600 suitable for being configured as the map client 120 and/or for carrying out the method 300 according to figure 3. For example, the map client 120 can be implemented as software code executing on general-purpose processing circuitry 602 of the computer system 600.

The computer system 600 is adapted to execute instructions from a computer-readable medium to perform these and/or any of the functions or processing described herein. The computer system 600 may be connected (e.g., networked) to other machines in a LAN, an intranet, an extranet, or the Internet. While only a single device is illustrated, the computer system 600 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 600 may comprise at least one computing device or electronic device capable of including firmware, hardware, and/or executing software instructions to implement the functionality described herein. The computer system 600 may include processing circuitry 602 (e.g., processing circuitry including one or more processor devices or control units), a memory 604, and a system bus 606. The computer system 600 may include at least one computing device having the processing circuitry 602. The system bus 606 provides an interface for system components including, but not limited to, the memory 604 and the processing circuitry 602. The processing circuitry 602 may include any number of hardware components for conducting data or signal processing or for executing computer code stored in memory 604. The processing circuitry 602 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 602 may further include computer executable code that controls operation of the programmable device.

The system bus 606 may be any of several types of bus structures that may further interconnect to a memory bus (with or without a memory controller), a peripheral bus, and/or a local bus using any of a variety of bus architectures. The memory 604 may be one or more devices for storing data and/or computer code for completing or facilitating methods described herein. The memory 604 may include database components, object code components, script components, or other types of information structure for supporting the various activities herein. Any distributed or local memory device may be utilized with the systems and methods of this description. The memory 604 may be communicably connected to the processing circuitry 602 (e.g., via a circuit or any other wired, wireless, or network connection) and may include computer code for executing one or more processes described herein. The memory 604 may include non-volatile memory 608 (e.g., read-only memory (ROM), erasable programmable read-only memory (EPROM), electrically erasable programmable read-only memory (EEPROM), etc.), and volatile memory 610 (e.g., random-access memory (RAM)), or any other medium which can be used to carry or store desired program code in the form of machine-executable instructions or data structures and which can be accessed by a computer or other machine with processing circuitry 602. A basic input/output system (BIOS) 612 may be stored in the non-volatile memory 608 and can include the basic routines that help to transfer information between elements within the computer system 600.

The computer system 600 may further include or be coupled to a non-transitory computer-readable storage medium such as the storage device 614, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 614 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 614 and/or in the volatile memory 610, which may include an operating system 616 and/or one or more program modules 618. All or a portion of the examples disclosed herein may be implemented as a computer program 620 stored on a transitory or non-transitory computer-usable or computer-readable storage medium (e.g., single medium or multiple media), such as the storage device 614, which includes complex programming instructions (e.g., complex computer-readable program code) to cause the processing circuitry 602 to carry out actions described herein. Thus, the computer-readable program code of the computer program 620 can comprise software instructions for implementing the functionality of the examples described herein when executed by the processing circuitry 602. In some examples, the storage device 614 may be a computer program product (e.g., readable storage medium) storing the computer program 620 thereon, where at least a portion of a computer program 620 may be loadable (e.g., into a processor) for implementing the functionality of the examples described herein when executed by the processing circuitry 602. The processing circuitry 602 may serve as a controller or control system for the computer system 600 that is to implement the functionality described herein.

The computer system 600 may include an input device interface 622 configured to receive input and selections to be communicated to the computer system 600 when executing instructions, such as from a keyboard, mouse, touch-sensitive surface, etc. Such input devices may be connected to the processing circuitry 602 through the input device interface 622 coupled to the system bus 606 but can be connected through other interfaces, such as a parallel port, an Institute of Electrical and Electronic Engineers (IEEE) 1394 serial port, a Universal Serial Bus (USB) port, an IR interface, and the like. The computer system 600 may include an output device interface 624 configured to forward output, such as to a display, a video display unit (e.g., a liquid crystal display (LCD) or a cathode ray tube (CRT)). The computer system 600 may include a communications interface 626 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. In addition, two or more actions may be performed concurrently or with partial concurrence.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure as set forth in the appended claims. In the drawings and specification, there have been disclosed aspects for purposes of illustration only and not for purposes of limitation, the scope of the disclosure being set forth in the following claims.

**Claims**

1. A map client (120) for a vehicle (160), the map client comprising:

   a geo-positioning module (125) configured to estimate a current position;
   a wireless interface (123) configured to request and receive map data from a server (110) over a wireless link (130), wherein the map data is divided into a basic layer (210) and a refinement layer (220) of a navigation map (200), wherein the basic layer includes road segments of major roads (231) and the refinement layer but not the basic layer includes road segments of minor roads (232);
   a map-data memory (121) configured to store basic-layer map data semi-persistently and to store any refinement-layer map data temporarily;
   a path-planning module (122.1) configured to generate paths according to a planning query using the map data stored in the map-data memory, the generated paths including a main path (401) and one or more alternative paths (402); and
   a path-execution module (122.2) configured to provide driving instructions for following the main path from the estimated current position, while assessing whether one of the alternative paths is more suitable for driving from the current position than the main path,
   wherein the wireless interface is configured to request refinement-layer map data from the server corresponding to a neighborhood (410) of the main path,
   **characterized in that** the neighborhood of the main path has a size (d) that is inversely related to a local road density of the navigation map.

2. The map client (120) of claim 1, wherein the path-planning module (122.1) is configured to generate, during execution of the main path (401), one or more additional alternative paths (402) according to the planning query from the estimated current position using the map data stored in the map-data memory (121).

3. The map client (120) of claim 1 or 2, wherein the wireless interface (123) is configured to request refinement-layer map data from the server (110) corresponding to a neighborhood (410) of the one or more alternative paths (402), wherein the neighborhood of the one or more alternative paths has a size (d) that is inversely related to a local road density of the navigation map.

4. The map client (120) of any of the preceding claims, wherein the local road density corresponds to a total length of the road segments per unit area of the navigation map.

5. The map client (120) of any of claims 1-3, wherein the local road density corresponds to a vertex connectivity of an imaginary graph whose edges are the road segments of the navigation map.

6. The map client (120) of any of claims 1-3, wherein the local road density corresponds to a data volume per unit area of the navigation map.

7. The map client (120) of any of the preceding claims, wherein:

   the path-execution module (122.2) is configured such that, if one of the alternative paths (402) is more suitable than the main path (401), it shall adopt this alternative path as new main path; and
   the wireless interface (123) is configured to update the neighborhood (410) in accordance with the current position and to request, if necessary, additional refinement-layer map data from the server (110) corresponding to the updated neighborhood (410).

8. The map client (120) of any of the preceding claims, wherein the minor roads are **characterized by** at least one of: having a relatively lower traffic throughput capacity, having a relatively lower historic usage, being administered by a lower-ranking road authority.

9. A method (300) of operating a map client (120) in wireless communication with a server (110), the method comprising:

repeatedly estimating (301) a current position using a geo-positioning technique;
receiving (302), from the server over a wireless link (130), map data to be stored semi-persistently in a map-data memory (121) of the map client (120), wherein the received map data belongs to a basic layer (210) of a navigation map (200) and the basic layer includes road segments of major roads (231);
generating (303) a plurality of paths according to a planning query using the map data stored in the map-data memory, the generated paths including a main path (401) and one or more alternative paths (402);
requesting (304) map data from the server to be stored temporarily in the map-data memory, wherein the requested map data pertains to a neighborhood (410) of the main path and belongs to a refinement layer (220) of the navigation map, wherein the refinement layer but not the basic layer includes road segments of minor roads (232); and
providing (305) driving instructions for following the main path from the estimated current position, while assessing (306) whether one of the alternative paths is more suitable for driving from the current position than the main path,
**characterized in that** the neighborhood of the main path has a size (d) that is inversely related to a local road density of the navigation map.

10. The method (300) of claim 9, further comprising:
generating (307), during execution of the main path (401) and using the map data stored in the map-data memory (121), one or more additional alternative paths (402) from the estimated current position.

11. The method (300) of claim 9 or 10, wherein the local road density corresponds to one of the following: a total length of the road segments per unit area of the navigation map; a vertex connectivity of an imaginary graph whose edges are the road segments of the navigation map; a data volume per unit area of the navigation map.

12. The method (300) of any of claims 9 to 11, further comprising:

updating the neighborhood (410) in accordance with the current position; and
requesting, if necessary, additional refinement-layer map data from the server (110) corresponding to the updated neighborhood (410).

13. A computer program comprising instructions to cause the map client (310) of claim 1 to execute the steps of the method of any of claims 9 to 12.

14. A vehicle (160) comprising the map client (120) of any of claims 1 to 8.

**Patentansprüche**

1. Map Client (120) für ein Fahrzeug (160), wobei der Map Client Folgendes umfasst:

ein Geopositionierungsmodul (125), das dazu konfiguriert ist, eine aktuelle Position zu schätzen;
eine drahtlose Schnittstelle (123), die dazu konfiguriert ist, Kartendaten von einem Server (110) über eine drahtlose Verbindung (130) anzufordern und zu empfangen, wobei die Kartendaten in eine Basisebene (210) und eine Optimierungsebene (220) einer Navigationskarte (200) unterteilt sind, wobei die Basisebene Straßensegmente von Hauptstraßen (231) enthält und die Optimierungsebene, jedoch nicht die Basisebene, Straßensegmente von Nebenstraßen (232) enthält;
einen Kartendatenspeicher (121), der dazu konfiguriert ist, Kartendaten der Basisebene semipersistent zu speichern und Kartendaten der Optimierungsebene temporär zu speichern;
ein Routenplanungsmodul (122.1), das dazu konfiguriert ist, gemäß einer Planungsanfrage unter Verwendung der im Kartendatenspeicher gespeicherten Kartendaten Routen zu generieren, wobei die generierten Routen eine Hauptroute (401) und eine oder mehrere alternative Routen (402) enthalten; und

ein Routenausführungsmodul (122.2), das dazu konfiguriert ist, Fahranweisungen zum Folgen der Hauptroute ausgehend von der geschätzten aktuellen Position bereitzustellen, während es überprüft, ob eine der alternativen Routen für das Fahren ausgehend von der aktuellen Position besser geeignet ist als die Hauptroute, wobei die drahtlose Schnittstelle dazu konfiguriert ist, vom Server Kartendaten der Optimierungsebene anzufordern, die einer Umgebung (410) der Hauptroute entsprechen,

**dadurch gekennzeichnet, dass** die Umgebung der Hauptroute eine Größe (d) aufweist, die im umgekehrten Verhältnis zu einer lokalen Straßendichte der Navigationskarte steht.

2. Map Client (120) nach Anspruch 1, wobei das Routenplanungsmodul (122.1) dazu konfiguriert ist, während der Ausführung der Hauptroute (401) eine oder mehrere zusätzliche alternative Routen (402) gemäß der Planungsanfrage ausgehend von der geschätzten aktuellen Position unter Verwendung der im Kartendatenspeicher (121) gespeicherten Kartendaten zu generieren.

3. Map Client (120) nach Anspruch 1 oder 2, wobei die drahtlose Schnittstelle (123) dazu konfiguriert ist, vom Server (110) Kartendaten der Optimierungsebene anzufordern, die einer Umgebung (410) der einen oder mehreren alternativen Routen (402) entsprechen, wobei die Umgebung der einen oder mehreren alternativen Routen eine Größe (d) aufweist, die im umgekehrten Verhältnis zu einer lokalen Straßendichte der Navigationskarte steht.

4. Map Client (120) nach einem der vorhergehenden Ansprüche, wobei die lokale Straßendichte der Gesamtlänge der Straßensegmente pro Einheitsfläche der Navigationskarte entspricht.

5. Map Client (120) nach einem der Ansprüche 1-3, wobei die lokale Straßendichte einem k-Zusammenhang eines imaginären Graphen entspricht, dessen Kanten die Straßensegmente der Navigationskarte sind.

6. Map Client (120) nach einem der Ansprüche 1-3, wobei die lokale Straßendichte einem Datenvolumen pro Einheitsfläche der Navigationskarte entspricht.

7. Map Client (120) nach einem der vorhergehenden Ansprüche, wobei:

das Routenausführungsmodul (122.2) derart konfiguriert ist, dass es, falls einer der alternativen Routen (402) besser geeignet ist als die Hauptroute (401), diese alternative Route als neue Hauptroute übernimmt; und die drahtlose Schnittstelle (123) dazu konfiguriert ist, die Umgebung (410) in Übereinstimmung der aktuellen Position zu aktualisieren und gegebenenfalls vom Server (110) zusätzliche Kartendaten der Optimierungsebene anzufordern, die der aktualisierten Umgebung (410) entsprechen.

8. Map Client (120) nach einem der vorhergehenden Ansprüche, wobei die Nebenstraßen durch mindestens eines von Folgendem gekennzeichnet sind: sie weisen ein relativ geringeres Verkehrsaufkommen auf, sie weisen eine relativ geringere Nutzungshistorie auf, sie werden durch eine untergeordnete Straßenverkehrsbehörde verwaltet.

9. Verfahren (300) zum Betreiben eines Map Clients (120) in drahtloser Kommunikation mit einem Server (110), wobei das Verfahren Folgendes umfasst:

wiederholtes Schätzen (301) einer aktuellen Position unter Verwendung einer Geopositionierungstechnik; Empfangen (302) von Kartendaten, die semipersistent in einem Kartendatenspeicher (121) des Map Clients (120) gespeichert werden sollen, vom Server über eine drahtlose Verbindung (130), wobei die empfangenen Kartendaten zu einer Basisebene (210) einer Navigationskarte (200) gehören und die Basisebene Straßensegmente von Hauptstraßen (231) enthält; Generieren (303) einer Vielzahl von Routen gemäß einer Planungsanfrage unter Verwendung der im Kartendatenspeicher gespeicherten Kartendaten, wobei die generierten Routen eine Hauptroute (401) und eine oder mehrere alternative Routen (402) enthalten; Anfordern (304) von Kartendaten vom Server, die temporär im Kartendatenspeicher gespeichert werden sollen, wobei die angeforderten Kartendaten eine Umgebung (410) der Hauptroute betreffen und zu einer Optimierungsebene (220) der Navigationskarte gehören, wobei die Optimierungsebene, jedoch nicht die Basisebene, Straßensegmente von Nebenstraßen (232) enthält; und Bereitstellen (305) von Fahranweisungen zum Folgen der Hauptroute ausgehend von der geschätzten aktuellen Position, während überprüft (306) wird, ob eine der alternativen Routen für das Fahren ausgehend von der aktuellen Position besser geeignet ist als die Hauptroute,
**dadurch gekennzeichnet, dass** die Umgebung der Hauptroute eine Größe (d) aufweist, die im umgekehrten Verhältnis zu einer lokalen Straßendichte der Navigationskarte steht.

10. Verfahren (300) nach Anspruch 9, das ferner Folgendes umfasst:
Generieren (307) einer oder mehrerer zusätzlicher alternativen Routen (402) ausgehend von der geschätzten aktuellen Position während der Ausführung der Hauptroute (401) und unter Verwendung der im Kartendatenspeicher (121) gespeicherten Kartendaten.

11. Verfahren (300) nach Anspruch 9 oder 10, wobei die lokale Straßendichte einem von Folgendem entspricht:
einer Gesamtlänge der Straßensegmente pro Einheitsfläche der Navigationskarte; einem k-Zusammenhang eines imaginären Graphen, dessen Kanten die Straßensegmente der Navigationskarte sind; einem Datenvolumen pro Einheitsfläche der Navigationskarte.

12. Verfahren (300) nach einem der Ansprüche 9 bis 11, das ferner Folgendes umfasst:
Aktualisieren der Umgebung (410) in Übereinstimmung mit der aktuellen Position; und gegebenenfalls Anfordern von zusätzlichen Kartendaten der Optimierungsebene vom Server (110), die der aktualisierten Umgebung (410) entsprechen.

13. Computerprogramm, das Anweisungen umfasst, um den Map Client (310) nach Anspruch 1 dazu zu veranlassen, die Schritte des Verfahrens nach einem der Ansprüche 9 bis 12 auszuführen.

14. Fahrzeug (160), das den Map Client (120) nach einem der Ansprüche 1 bis 8 umfasst.

## Revendications

1. Client de carte (120) pour véhicule (160), le client de carte comprenant :

un module de géolocalisation (125) configuré pour estimer une position actuelle ;
une interface sans fil (123) configurée pour demander et recevoir des données cartographiques d'un serveur (110) sur une liaison sans fil (130), les données cartographiques étant divisées en une couche de base (210) et une couche d'affinement (220) d'une carte de navigation (200), la couche de base comprenant des segments routiers de routes principales (231) et la couche d'affinement, mais la couche de base ne comprenant pas des segments routiers secondaires (232). une mémoire de données cartographiques (121) configurée pour stocker des données cartographiques de couche de base de manière semi-persistante et pour stocker temporairement toute donnée cartographique de couche d'affinement ;
un module de planification de trajets (122.1) configuré pour générer des trajets en fonction d'une demande de planification utilisant les données cartographiques stockées dans la mémoire de données cartographiques, les trajets générés comprenant un trajet principal (401) et un ou plusieurs trajets alternatifs (402) ; et un module d'exécution de trajet (122.2) configuré pour fournir des instructions de pilotage pour suivre le trajet principal à partir de la position actuelle estimée, tout en évaluant si l'un des trajets alternatifs est plus approprié pour conduire à partir de la position actuelle que le trajet principal,
l'interface sans fil étant configurée pour demander des données cartographiques de couche d'affinement au serveur correspondant à un voisinage (410) du trajet principal, **caractérisé en ce que** le voisinage du trajet principal a une taille (d) qui est inversement liée à une densité routière locale de la carte de navigation.

2. Client de carte (120) selon la revendication 1, dans lequel le module de planification de trajet (122.1) est configuré pour générer, pendant l'exécution du trajet principal (401), un ou plusieurs trajets alternatifs supplémentaires (402) selon la requête de planification à partir de la position actuelle estimée en utilisant les données cartographiques stockées dans la mémoire de données cartographiques (121).

3. Client de carte (120) selon la revendication 1 ou 2, dans lequel l'interface sans fil (123) est configurée pour demander des données cartographiques de couche d'affinement au serveur (110) correspondant à un voisinage (410) des un ou plusieurs trajets alternatifs (402), le voisinage des un ou plusieurs trajets alternatifs ayant une taille (d) qui est inversement liée à une densité routière locale de la carte de navigation.

4. Client de carte (120) selon l'une quelconque des revendications précédentes, dans lequel la densité routière locale correspond à une longueur totale des segments routiers par unité de surface de la carte de navigation.

**5.** Client de carte (120) selon l'une quelconque des revendications 1 à 3, dans lequel la densité routière locale correspond à une connectivité sommitale d'un graphique imaginaire dont les bords sont les segments routiers de la carte de navigation.

**6.** Client de carte (120) selon l'une quelconque des revendications 1 à 3, dans lequel la densité routière locale correspond à un volume de données par unité de surface de la carte de navigation.

**7.** Client de carte (120) selon l'une quelconque des revendications précédentes, dans lequel :

le module d'exécution de trajet (122.2) est configuré de telle sorte que, si l'un des trajet alternatifs (402) est plus approprié que le trajet principal (401), il adopte ce trajet alternatif comme nouveau trajet principal ; et l'interface sans fil (123) est configurée pour mettre à jour le voisinage (410) en fonction de la position actuelle et pour demander, si nécessaire, des données cartographiques de couche d'affinement supplémentaires au serveur (110) correspondant au voisinage mis à jour (410) .

**8.** Client de carte (120) selon l'une quelconque des revendications précédentes, dans lequel les routes secondaires sont **caractérisées par** au moins l'une des caractéristiques suivantes : avoir une capacité de débit de trafic relativement plus faible, avoir une utilisation historique relativement plus faible, être administrée par une autorité routière de rang inférieur.

**9.** Procédé (300) d'exploitation d'un client de carte (120) en communication sans fil avec un serveur (110), le procédé comprenant :

l'estimation répétée (301) d'une position actuelle au moyen d'une technique de géolocalisation ; la réception (302), en provenance du serveur via une liaison sans fil (130), de données cartographiques à stocker de manière semi-persistante dans une mémoire de données cartographiques (121) du client de carte (120), les données cartographiques reçues appartenant à une couche de base (210) d'une carte de navigation (200) et la couche de base comprenant des segments routiers de routes principales (231) ; la génération (303) d'une pluralité de trajets selon une requête de planification utilisant les données cartographiques stockées dans la mémoire de données cartographiques, les trajets générés comprenant un trajet principal (401) et un ou plusieurs trajets alternatifs (402) ; la demande (304) de données cartographiques du serveur à stocker temporairement dans la mémoire de données cartographiques, les données cartographiques demandées se rapportant à un voisinage (410) du trajet principal et appartenant à une couche d'affinement (220) de la carte de navigation, la couche d'affinement mais non la couche de base comprenant des segments routiers de routes secondaires (232) ; et la fourniture (305) d'instructions de conduite pour suivre le trajet principal à partir de la position actuelle estimée, tout en évaluant (306) si l'un des trajets alternatifs est plus approprié pour la conduite à partir de la position actuelle que le trajet principal, **caractérisé en ce que** le voisinage du trajet principal a une taille (d) qui est inversement liée à une densité routière locale de la carte de navigation.

**10.** Procédé (300) selon la revendication 9, comprenant en outre : la génération (307), pendant l'exécution du trajet principal (401) et à l'aide des données cartographiques stockées dans la mémoire de données cartographiques (121), d'un ou de plusieurs trajets alternatifs supplémentaires (402) à partir de la position actuelle estimée.

**11.** Procédé (300) selon la revendication 9 ou 10, dans lequel la densité routière locale correspond à l'une des valeurs suivantes : une longueur totale des segments routiers par unité de surface de la carte de navigation ; une connectivité sommitale d'un graphique imaginaire dont les bords sont les segments routiers de la carte de navigation ; un volume de données par unité de surface de la carte de navigation.

**12.** Procédé (300) selon l'une quelconque des revendications 9 à 11, comprenant en outre :

la mise à jour du voisinage (410) conformément à la position actuelle ; et la demande, si nécessaire, de données cartographiques de couche d'affinement supplémentaires auprès du serveur (110) correspondant au voisinage mis à jour (410).

13. Programme informatique comprenant des instructions pour amener le client de carte (310) selon la revendication 1 à exécuter les étapes du procédé selon l'une quelconque des revendications 9 à 12.

14. Véhicule (160) comprenant le client de carte (120) selon l'une quelconque des revendications 1 à 8.

*Fig. 1*

Fig. 2

*Fig. 3*

*Fig. 4*

*Fig. 5*

*Fig. 6*

**REFERENCES CITED IN THE DESCRIPTION**

**Patent documents cited in the description**

- US 20130345977 A1
- US 2006155462 A1
- US 2006025923 A1
- US 2020393261 A1